# EUROPÄISCHE PATENTSCHRIFT

(11) **EP 3 940 185 B1**
(45) Veröffentlichungstag und Bekanntmachung des Hinweises auf die Patenterteilung: **21.09.2022**
(21) Anmeldenummer: 20186556.5
(22) Anmeldetag: 17.07.2020
(51) Int. Cl.: G01L 5/103, E06B 9/32, E06B 9/68

(54) **SICHERHEITSVORRICHTUNG FÜR EINEN RAFFSTORE, RAFFSTORE MIT EINER SOLCHEN SICHERHEITSVORRICHTUNG UND STEUERUNGSVERFAHREN ZUR ANSTEUERUNG EINES ELEKTROMOTORISCHEN RAFFSTOREANTRIEBS**
SAFETY DEVICE FOR A SHUTTER BLIND, SHUTTER BLIND WITH SUCH A SAFETY DEVICE AND CONTROL METHOD FOR DRIVING AN ELECTRIC MOTOR-DRIVEN ROLLER SHUTTER DRIVE
DISPOSITIF DE SÉCURITÉ POUR UN STORE À LAMELLES, STORE À LAMELLES DOTÉ D'UN TEL DISPOSITIF DE SÉCURITÉ ET PROCÉDÉ DE COMMANDE PERMETTANT DE COMMANDER UN ENTRAÎNEMENT ÉLECTROMOTEUR DE STORE À LAMELLES

(43) Veröffentlichungstag der Anmeldung: 19.01.2022
(73) Patentinhaber: ROMA KG, 89331 Burgau (DE)
(72) Erfinder: Krell, Rudolf, 89331 Burgau (DE); Pfaudler, Volker, 89331 Burgau (DE)
(74) Vertreter: Patentanwälte Munk

(56) Entgegenhaltungen:
- EP-A1- 1 077 378
- EP-A1- 2 927 653
- WO-A1-2010/079188
- DE-U1- 20 102 367
- DE-U1-202018 100 743
- FR-A1- 2 929 320

## Beschreibung

Die Erfindung betrifft eine Sicherheitsvorrichtung für einen Raffstore gemäß dem Oberbegriff des Anspruchs 1, sowie einen mit einer solchen Sicherheitsvorrichtung ausgestatteten Raffstore gemäß dem Oberbegriff des Anspruchs 9, sowie ein Steuerungsverfahren zur Ansteuerung eines elektromotorischen Antriebs eines solchen Raffstores gemäß dem Oberbegriff des Anspruchs 14 oder 15.

Bei Sonnenschutzanlagen aller Art stellen Beschädigungen aufgrund von Windböen und Sturm ein Problem dar, wenn sich der Behang oder das Markisentuch in einer ausgefahrenen Stellung befindet und dann Sturmwind aufkommt. Hierzu ist es bekannt, mittels sogenannten Windwächtern die Luftbewegung zu überwachen und bei Überschreiten bestimmter Grenzwerte den Behang der Sonnenschutzanlage aufzuholen. Derartige Windwächter sind in der Regel entfernt von der Sonnenschutzanlage an einer exponierten Stelle der Fassade angebrachte Sensoreinheiten in einem zum Anbringen an der Fassade geeigneten Gehäuse und steuern oft sämtliche am Gebäude vorhandenen Sonnenschutzanlagen.

Nachteilig dabei ist es jedoch, dass solche zentralen Windsensoren lediglich die Windbelastung an dieser exponierten Stelle am Gebäude wiedergeben, so dass auch Sonnenschutzeinrichtungen, die an eher windgeschützten Bereichen installiert sind (z. B. im Innenhof) bei Überschreitung des Schwellwerts am zentralen Windwächter eingefahren werden, obwohl die Anlagen selbst noch nicht einer windgefährdeten Situation ausgesetzt sind. Die Nutzbarkeit der Sonnenschutzinstallation im Gesamtgebäude wird somit unnötig eingeschränkt.

Gerade Raffstoren sind zudem gegenüber Windbelastungen relativ anfällig, so dass ein erhöhtes Augenmerk auf den Schutz von Raffstoren vor Beschädigungen durch Windstöße oder dergleichen zu legen ist.

Die französische Patentanmeldung FR 2929320 A1 offenbart einen Raffstore, der von einem Gleichstrommotor angetrieben wird, dessen aufgenommene Spannung mit einem Messgerät als Maß für das anliegende Drehmoment erfasst wird. Weiterhin sind bereits mit Sensoren ausgestattete Raffstoren bekannt, die Beschädigungen durch Windstöße verhindern sollen.

So ist z. B. der internationalen Patentanmeldung WO 2010/079188 A1 ein Raffstore zu entnehmen, dessen oberste Lamelle mit einem Windsensor versehen ist.

Dieser Sensor ist jedoch nicht nur optisch störend, sondern auch nur schwer so an der obersten Lamelle zu montieren, dass sich im Dauerlastbetrieb nicht die Gefahr einstellt, dass sich die Verbindung mit der obersten Lamelle löst oder dass die oberste Lamelle besonders für die Montage des Sensors ausgebildet sein muss.

Das deutsche Gebrauchsmuster DE 201 02 367 U1 erwähnt die Möglichkeit die Windlast durch einen Kraftsensor zu ermitteln, ohne konkret einen geeigneten Einbauort vorzuschlagen.

Hiervon ausgehend liegt der vorliegenden Erfindung daher die Aufgabe zugrunde, die Betriebssicherheit von Raffstoren auf kostengünstige und über die gesamte Lebensdauer zuverlässige Weise zu erhöhen.

Diese Aufgabe wird hinsichtlich der Sicherheitsvorrichtung für den Raffstore mit den Merkmalen des Anspruchs 1 gelöst, hinsichtlich des mit der Sicherheitsvorrichtung ausgestatteten Raffstores mit den Merkmalen des Anspruchs 9, und hinsichtlich des Steuerungsverfahrens für den Raffstoreantrieb mit den Merkmalen des Anspruchs 14 oder 15.

Ein Raffstore, welcher eine an bzw. in einer Kopfleiste drehbar gelagerte Wickelwelle aufweist, an der Aufzugbänder und Wendebandstränge aufgenommen sind, und der ferner einen Lamellenbehang hat, dessen Lamellen mittels der Aufzugbänder ablass- und aufziehbar und mittels der Wendebandstränge schwenkbar sind, wobei die Aufzugbänder an der untersten Lamelle oder Unterschiene des Lamellenbehangs angreifen und die anderen Lamellen durchgreifen, und wobei die Wendebandstränge jeweils ein Wendeband umfassen, das an einer Längsseite der Lamellen angreift, weist zumindest eine Sicherheitsvorrichtung auf.

Die Sicherheitsvorrichtung umfasst erfindungsgemäß zumindest eine Sensoreinheit mit einem Sensor, wobei die Sensoreinheit Anbindungsmittel aufweist, die geeignet sind, um den Sensor an einen Wendebandstrang des Raffstores zugkrafterfassend an- bzw. in den Wendebandstrang einzubinden, vorausgesetzt, dass der Sensor zum Erfassen einer Zugkraft bzw. einer Zugkraftänderung geeignet ist. Die zumindest eine Sensoreinheit der Sicherheitsvorrichtung ist dabei an zumindest einem Wendebandstrang des Raffstores zugkrafterfassend an- bzw. eingebunden. Weiterhin erfindungsgemäß ist der Sensor dabei zum Ausgeben eines elektrischen Ausgangssignals eingerichtet, welches der erfassten Zugkraft bzw. Zugkraftänderung entspricht, so dass die auf den Wendebandstrang wirkende Zugkraft bzw. Zugkraftänderung signalisierbar ist.

Mit der erfindungsgemäßen Sicherheitsvorrichtung lässt sich ein Raffstore mit einer von einem zentralen Windwächter oder einem optisch störenden Windsensor unabhängigen Windüberwachung ausstatten und zudem mit weiteren die Betriebsicherheit erhöhenden Überwachungseinrichtungen.

Damit lassen sich erfindungsgemäß Steuerungsverfahren zur Ansteuerung eines elektromotorischen Raffstores realisieren, und zwar unabhängig davon, ob die Sensoreinheit der Sicherheitsvorrichtung an einen Wendebandstrang desselben Raffstores oder eines anderen Raffstores angebunden ist. So wäre es beispielsweise denkbar, die elektromotorischen Antriebe aller Raffstoren einer Gebäudefront unter Miteinbeziehung der von einem bei einem einzelnen Raffstore am Wendebandstrang vorgesehenen Sensor gelieferten Ausgangssignale anzusteuern, etwa mittels einer übergeordneten Hausautomation oder über eine direkte Beschickung der einzelnen Raffstoreantriebe mit dem Ausgangssignal, sei es in unverarbeiteter oder in für die Ansteuerung der Raffstoreantriebe aufbereiteter Form. Im Regelfall wird der Raffstore jedoch sowohl die Sicherheitsvorrichtung als auch den anzusteuernden Raffstoreantrieb enthalten.

Erfindungsgemäß wird dazu ein Ausgangssignal eines an einem Bandstrang, insbesondere Wendebandstrang eines Raffstores angreifenden und eine auf den Bandstrang wirkende Zuglast erfassenden Sensors direkt oder in aufbereiteter Form als Eingangssignal genommen, wobei vorteilhaft ein Sensor einer Sicherheitsvorrichtung der erfindungsgemäßen oder gemäß der Unteransprüche 2 bist 8 weitergebildeten Art verwendet wird. Weiterhin erfindungsgemäß wird erfasst, ob der zu steuernde, elektromotorische Raffstoreantrieb steht. Falls der Sensor an einem Bandstrang desselben Raffstores angebunden ist, der den zu steuernden Raffstoreantrieb enthält, kann dies beispielsweise dadurch erfolgen, dass erfasst wird, ob das Ausgangssignal des an dem Bandstrang des Raffstores angreifenden und die auf den Bandstrang wirkende Zuglast erfassenden Sensors einen waagrechten zeitlichen Verlauf hat.

Gemäß eines ersten Aspekts wird dann, wenn erfasst wird, dass der Raffstoreantrieb steht, überwacht, ob das Ausgangssignal von dem waagrechten zeitlichen Verlauf oder einem eine Gewichtsbelastung des Bandstrangs bei stehendem Raffstoreantrieb entsprechenden Normalwert des Ausgangssignals abweicht. Dabei wird bei einer als signifikant erfassten Abweichung ein Steuersignal zur Ansteuerung des Raffstoreantriebs erzeugt, also beispielsweise bei einer über einem vorzugebenen Grenzwert liegenden Abweichung, einer mehrfachen und in unterschiedliche Richtungen erfolgenden Abweichung und/oder besonders schnellen Richtungsänderungen gegenüber dem Normalwert. Das Steuersignal kann dann beispielsweise einem Aufziehen des Lamellenbehangs entsprechen, also ein Aufziehen des Lamellenbehangs durch den Raffstoreantrieb auslösen bzw. es kann eine Motorsteuerung zur Ansteuerung des Raffstoreantriebs in diesem Sinne veranlasst werden. Es wäre jedoch auch denkbar, ein Steuersignal zur Ansteuerung einer übergeordneten Alarmanlage abzugeben, dass dann beispielsweise einem Ausgeben eines Alarmsignals entsprechen könnte.

Damit lässt sich in erster Linie ein Schutz des oder der Raffstoren vor Beschädigungen aufgrund zu hoher Windeinwirkung realisieren, wobei der Lamellenbehang des oder der Raffstoren bei hoher Windeinwirkung in eine sichere Position gebracht wird, also komplett nach oben eingefahren wird. Wird im Ruhezustand des Motors eine signifikante Abweichung vom Sollwert der auf den per Sensor überwachten Bandstrang wirkenden Gewichtskraft erfasst, so kann dies als das Aufkommen von Sturm interpretiert werden und der Behang eingefahren werden.

Während insbesondere bei Erfassung von mehreren stoßhaften Änderungen im Ausgangssignal des Sensors von auftretenden Windböen ausgegangen werden kann, lässt sich durch Erfassen, ob sich die Gewichtsbelastung auf den Bandstrang bei stehendem Raffstoreantrieb einmalig signifikant vermindert auch ein Einbruchsversuch gut erkennen. Denn wenn der Lamellenbehang des Raffstores per Hand hochgehoben wird, wird durch den in den Bandstrang eingebundenen Sensor eine signifikante Reduktion der auf den Bandstrang wirkenden Gewichtskraft, also Zugbelastung erfasst. Dies gilt auch, wenn der Bandstrang durchgeschnitten wird. In diesem Fall lässt sich dann eine vorzugebende Reaktion des Raffstoreantriebs auslösen oder optional ein zusätzliches Alarmsignal einer übergeordneten Hausautomationsanlage oder Alarmanlage. Bei einer einmaligen signifikanten Erhöhung der Zuglast im Bandstrang beim Anfahren, aber noch stehendem Motor liese sich dies dagegen als Festfrieren oder Blockieren des Behangs interpretieren, woraufhin ein Motorstopp ausgelöst werden kann.

Gemäß eines zweiten Aspekts des erfindungsgemäßen Steuerungsverfahrens wird dann, wenn festgestellt wird, dass der anzusteuerende Raffstoreantrieb nicht steht, also der Lamellenbehang aufgezogen oder abgelassen wird, überwacht, ob das Ausgangssignal des an dem Bandstrang des Raffstores zugkrafterfassend angebrachten Sensors von einem normalen zeitlichen Verlauf des Ausgangssignals während des Aufziehens oder Ablassens des Lamellenbehangs abweicht. Der normale zeitliche Verlauf des Ausgangssignals während des Aufziehens oder Ablassens des Lamellenbehangs kann dabei zuvor abgespeichert werden, etwa bereits ab Werk oder durch eine Referenzfahrt bei der Installation des Raffstores am Gebäude, wobei der über den am Bandstrang, insbesondere Wendebandstrang angebundene Sensor insbesondere der Sicherheitsvorrichtung nach einem der Ansprüche 1 bis 9 den Zugkraftverlauf im Bandstrang während der Referenzfahrt abtastet und dann das Ausgangssignal des Sensors während der Referenzfahrt direkt oder in einer aufbereiteten Form aufgezeichnet wird. Bei einer als signifikant detektierten Abweichung wird dann ein Steuersignal zur Ansteuerung des Raffstores erzeugt. Das Steuersignal kann dabei beispielsweise einem Motorstopp entsprechen bzw. den Motorstopp auslösen.

Auf diese Weise kann die Betriebssicherheit des Raffstores noch durch eine Hinderniserkennung erhöht werden, da die Abweichung des Sensor-Ausgangsignals von seinem spezifischen Verlauf während einer Fahrt in Auf- oder Ab-Richtung als Fahrt auf ein Hindernis bzw. als Blockade des Behangs interpretiert werden kann.

Vorteilhaft ist es dabei, wenn die Sicherheitsvorrichtung mehrere Sensoreinheiten zum Anbringen an mehreren Wendebandsträngen des Raffstores umfasst, da dann in dem Fall, dass nur einer der Sensoren eine Reduktion der aufgenommenen Zugkraft am Wendeband erfasst, dies noch eindeutiger als ein einseitiges Hindernis, z. B. eine Leiter oder Ähnliches interpretiert werden kann. Auch für die Validierung, ob ein Einbruchsversuch vorliegt oder Starkwind auftritt, kann es von Vorteil sein, wenn mehrere Sensoren an mehreren der Wendebänder eines Raffstores angebracht sind, die Sicherheitsvorrichtung also mehrere Sensoreinheiten zur Anbringung an einem Wendebandstrang des Raffstores aufweist. Natürlich ist auch die Ausrüstung mehrerer Raffstoren mit jeweils einem oder mehreren der Sensoreinheiten der Sicherheitsvorrichtung denkbar.

Im Sinne der Erfindung wäre es auch denkbar, die Sicherheitsvorrichtung zu einer automatischen Endlageneinstellung und -korrektur zu nutzen, wobei durch Aufzeichnung des Ausgangssignals des Sensors während einer Referenzfahrt, bei der der Lamellenbehang des Raffstores vollständig abgewickelt und wieder aufgewickelt wird, die untere Endlage des Lamellenbehangs detektiert und gespeichert wird.

Vorteilhaft kann die Sicherheitsvorrichtung auch an bestehenden Raffstores nachgerüstet werden.

Weiterhin vorteilhaft ist bzw. wird der Sensor dabei möglichst weit oben im Wendebandstrang eingebunden, also oberhalb des Bereichs, den die oberste Lamelle des Lamellenbehangs im aufgezogenen Zustand des Lamellenbehangs einnimmt. Denn dort ist der Sensor optisch nicht störend, da er sich innerhalb desjenigen Bereichs befindet, der von einer Blende bzw. einem Kasten des Raffstores vor Blicken geschützt ist. Zudem ändert sich dort seine Position auch während der Betätigung des Lamellenbehangs nicht merklich, so dass die Verdrahtung des Sensors etwa mit einer Stromversorgung im Bereich der Kopfleiste des Raffstores und mit dem anzusteuerenden Raffstoreantriebs bzw. einer vorgeschalteten Steuerelektronik konstruktiv einfach ausgebildet sein kann. Bevorzugt ist die Sensoreinheit der Sicherheitsvorrichtung daher zwischen einem Wendekordelhalter an der Wickelwelle des Raffstores und der obersten Lamelle des aufgezogenen Raffstorebehangs an den Wendebandstrang angebunden.

Wendekordelhalter sind bei modernen Raffstoren meist Teil von sogenannten Wendegetrieben, in denen jeweils eine Haspeleinheit zum Auf- und Abwickeln eines Aufzugbands und der Wendekordelhalter für einen oder zwei sich auf gegenüberliegenden Seiten des Lamellenbehangs befindliche Wendebandstränge so miteinander gekoppelt sind, dass am Ende des Abwickelns des Aufzugbands und damit des Ablassens des Lamellenbehangs der Wendekordelhalter verschwenkt wird, wodurch über den bzw. die Wendebandstränge ein Verschwenken der Lamellen aus einer geöffneten Stellung eine geschlossene Stellung durchgeführt wird. Instruktiv hierzu ist die eigene europäische

Patentanmeldung EP 2 634 354 A1.

Die an dem Wendekordelhalter angebrachten Wendekordeln sind dabei jeweils mit einem Wendeband des Raffstorebehangs verknüpft, vorteilhaft lösbar verknüpft, so dass der Raffstorebehang beispielsweise zu Revisionszwecken einfach abgenommen werden kann.

Daher ist es im Hinblick auf eine einfache Montage vorteilhaft, wenn die Sensoreinheit der Sicherungsvorrichtung im Wendebandstrang zwischen Wendeband und Wendekordel eingebunden bzw. eingefügt ist bzw. wird. Dazu kann die Sensoreinheit Anbindungsmittel umfassen, die geeignet sind, um an einem Band- bzw. Kordelende, also dem Wendebandende einerseits und dem Wendekordelende andererseits angebunden zu werden. Das Wendeband und/oder die Wendekordel kann dazu entsprechend gekürzt oder umgeschlagen werden, um die Länge des um die Sicherungseinheit ergänzten Wendebandstrangs auf die Länge der anderen Wendebandstränge anzugleichen. Dafür eignet sich im besonderem Maße Kugelkopfkupplungen, die einen Kugelkopf und eine beispielsweise als Klipsaufnahme zum Einklipsen des zugeordneten Kugelkopfs ausgebildete Kugelkopfaufnahme aufweisen. Der Kugelkopf kann dabei jeweils beispielsweise über ein Drahtseil oder einen entsprechenden Bolzen am Sensor angebracht sein. So kann der Sensor beispielsweise einen Sensorkörper aufweisen, an dem in einer vorgegebenen Soll-Lastrichtung gegenüberliegend jeweils ein Anbindungsmittel zum Anbinden eines Band- bzw. Kordelendes des Wendebandstrangs angebracht ist, also beispielsweise ein über einen in Soll-Lastrichtung weisenden Bolzen angebrachter Kugelkopf einer Kugelkopfkupplung, deren Kugelkopfaufnahme wiederum am Wendeband- bzw. Wendekordelende befestigt ist.

Als Sensor eignen sich dabei insbesondere Kraftsensoren, die in der Regel einen Federkörper als Sensorkörper haben, an dem meist über eine Wheatstone-Brücke geschaltet eine Anzahl Dehnungsmessstreifen angebracht ist. Hierbei haben sich insbesondere Membran-Kraftsensoren als geeignet erwiesen, wobei die Verwendung anderer Sensoren, wie beispielsweise Piezoelemente ebenfalls denkbar wäre, solange mit ihnen die im Wendebandstrang herrschende Zugbelastung oder eine dieser Zugbelastung entsprechende Größe aufgenommen werden kann.

Zur Aufbereitung des vom Sensor gelieferten Ausgangssignals kann die Sicherheitsvorrichtung dabei eine Signalaufbereitungsstufe umfassen, die eingerichtet ist, um das Ausgangssignal zur Verwendung für eine Ansteuerung eines elektromotorischen Raffstoreantriebs aufzubereiten. Hierzu kann die Signalaufbereitungsstufe abhängig vom verwendeten Sensor einen Messverstärker und/oder einen Ladungsverstärker aufweisen, um aus dem Ausgangssignal Eingangssignale zu erzeugen, wie sie für Motorsteuerungen an einem elektromotorischen Raffstoreantrieb üblich sind oder von einer vorgeschalteten Motorsteuerung verarbeitet werden können. Die Signalaufbereitungsstufe oder die Motorsteuerung des elektromotorischen Raffstoreantriebs bzw. eine vorgelagerte Steuerungseinrichtung kann zudem einen Analog-Digital-Wandler umfassen, um aus dem Ausgangssignal oder dem aufbereiteten Ausgangssignal digitale Steuerungssignale für die Ansteuerung des elektromotorischen Raffstoreantriebs zu generieren.

Integriert in eine am elektromotorischen Raffstoreantrieb verbaute Motorsteuerung oder in einer separaten, vorgelagerten Steuerungsvorrichtung kann dabei eine Steuerungseinrichtung vorgesehen sein, die vorzugsweise eine Mikrocontrollereinheit umfasst, in der direkt oder aus den aufbereiteten Ausgangssignalen Steuersignale für eine Ansteuerung des elektromotorischen Raffstoreantriebs erzeugt werden. Die Steuerungseinrichtung kann dabei die zur Durchführung der vorstehend beschriebenen Steuerungsverfahren nötige Hardware, beispielsweise in Form der Mikrocontrollereinheit und entsprechenden Arbeits- und Programmspeichern aufweisen und Software, welche die vorstehend beschriebenen Steuerungsverfahren umsetzt.

Zur Vernetzung mehrerer Raffstoren miteinander kann die Sicherheitsvorrichtung zumindest eine, bevorzugt eine Mehrzahl der Sensoreinheiten sowie zumindest eine, bevorzugt eine Mehrzahl der Steuerungseinrichtungen und zudem eine Mehrzahl von Motorsteuerungsvorrichtungen zur Ansteuerung einer Mehrzahl von elektromotorischen Raffstoreantrieben aufweisen. Dabei kann jede Sensoreinheit mit einer der Steuerungseinrichtungen signalübertragend verbunden sein. Zumindest eine der Motorsteuerungsvorrichtungen kann dann eine Steuerungseinrichtung umfassen oder mit einer vorgeschalteten Steuerungseinrichtung am Raffstore kabelverbunden sein, wobei die anderen Motorsteuerungsvorrichtungen mit derjenigen Motorsteuerungsvorrichtung vernetzt sein können, die die zumindest eine Steuerungseinrichtung umfasst oder mit dieser verdrahtet ist, wobei dann jede Motorsteuerungsvorrichtung dazu eingerichtet ist, bei der Ansteuerung des zugeordneten elektromotorischen Raffstoreantriebs die Steuersignale der zumindest einen Steuerungseinrichtung miteinzubeziehen.

Der Raffstore kann als elektromotorischen Raffstoreantrieb einen insbesondere in der Kopfleiste angeordneten Elektromotor zur Betätigung der Wickelwelle aufweisen, der mit einer Motorsteuerung ausgestattet ist, welche den Elektromotor unter Berücksichtigung des von der Sensoreinheit an einem seiner Wendebandstränge erzeugten Ausgangssignals ansteuert.

Der Raffstore kann jedoch auch einen elektromotorischen Raffstoreantrieb mit einer Motorsteuerung aufweisen, welche den Raffstoreantrieb unter Berücksichtigung eines von einer Sensoreinheit an einem Wendebandstrang eines anderen Raffstores erzeugten Ausgangssignals ansteuert.

Der Raffstore kann ferner eine in die Motorsteuerung integrierte oder der Motorsteuerung vorgeschaltete Steuereinrichtung aufweisen, in der aus dem Ausgangssignalen der Sensoreinheit direkt oder nach Aufbereitung durch eine zwischengeordnete Signalaufbereitungsstufe Steuersignale für die Weiterverarbeitung in der Motorsteuerung des Raffstores oder direkt zur Ansteuerung des Raffstoreantriebs erzeugt werden, und zwar insbesondere entsprechend der vorstehend erläuterten Steuerungsverfahren.

Die Sensoreinheit kann dabei aufgrund ihrer relativ feststehenden Positionierung im oberen Bereich des Wendebandstrangs auf einfache Weise mit einer Stromversorgung und/oder Signalaufbereitungsstufe und/oder Steuereinheit verdrahtet sein, die im Bereich der Kopfleiste des Raffstores angeordnet sein können. Es wäre jedoch ebenfalls denkbar, den Sensor alleine oder mit der Signalaufbereitungsstufe zusammengefasst in die Sensoreinheit zu integrieren, zusammen mit einem Funkmodul, z. B. auf Bluetooth oder NFC-Basis, um das Ausgangssignal unbearbeitet oder aufbereitet an nachgeschaltete Module der Signalverarbeitungskette zu senden. Hierfür wäre dann eine Batterie- bzw. Akkustromversorgung des Sensors zweckmäßig.

Weitere Einzelheiten der Erfindung werden nachfolgend anhand der in den beigefügten Zeichnungen dargestellten Ausführungsformen näher erläutert. Es zeigen:
- Figur 1: einen Raffstore gemäß einer Ausführungsform der Erfindung;
- Figur 2 und 3: eine Sicherheitsvorrichtung gemäß einer Ausführungsform der Erfindung;
- Figur 4: eine Signalverarbeitungskette von der in den Raffstore der

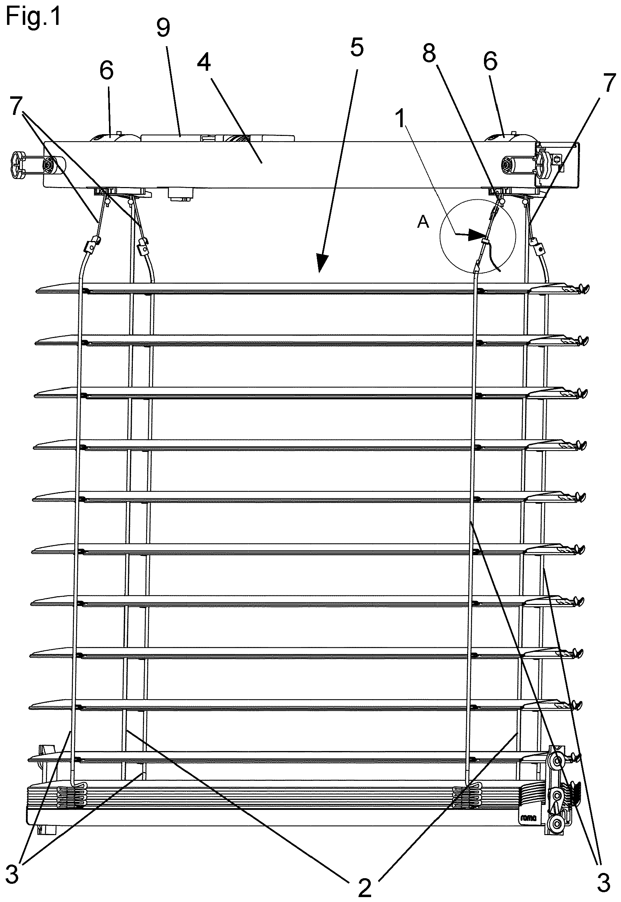

Figur 1 eingebauten Sicherheitsvorrichtung bis zu einer Motorsteuerung des Raffstores;

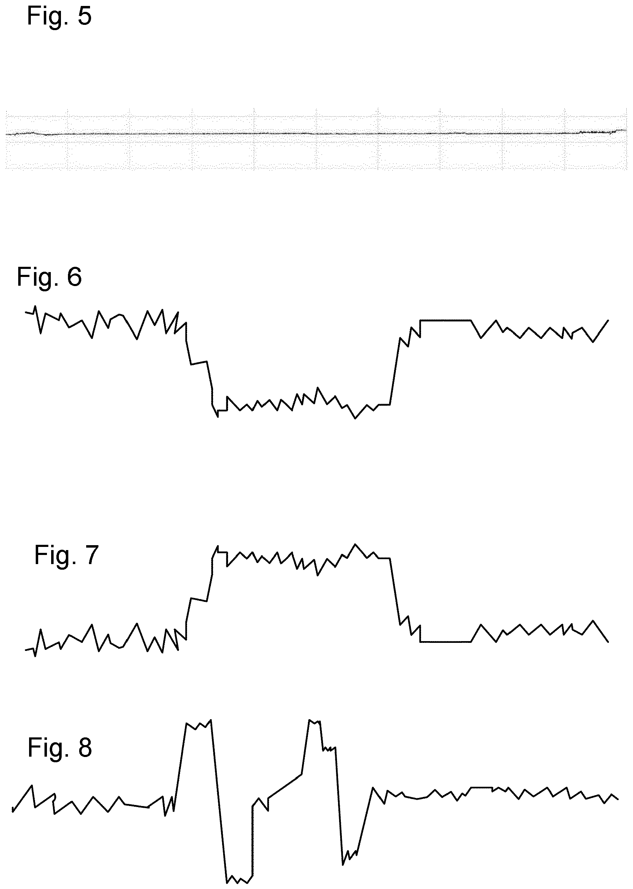

Figur 5 bis 10 charakteristische Verläufe des Ausgangssignals des Sensors der Sicherheitsvorrichtung.

Die Fig. 1 zeigt einen Raffstore mit einer Kopfleiste 4 zur Anbringung in einem gebäudeseitigen Einbauraum, an der über Aufzugbänder 2 ein aus Lamellen bestehender Lamellenbehang 5 aufgehängt ist. Die Aufzugbänder 2 greifen dabei an einer Unterschiene des Raffstores an und durchgreifen die anderen Lamellen und sind jeweils an einem Wendegetriebe auf- und abrollbar aufgenommen, welches auf einer in der Kopfleiste 4 untergebrachten Wickelwelle sitzt. Das Wendegetriebe umfasst dabei jeweils auch einen mit einer Haspel zum Auf- und Abwickeln der Aufzugbänder 2 gekoppelten Wendekordelhalter 6, der zu beiden Seiten der Wickelwelle jeweils eine Wendekordel 7, 8 trägt. Mittels eines in der Kopfleiste 4 aufgenommenen Elektromotors, der als elektromotorischer Antrieb 9 des Raffstores dient wird dabei die Wickelwelle angetrieben, was mittels der Wendegetriebe in ein Auf bzw. Ab des Behangs 5 oder am Beginn und am Ende der Fahrt in ein Verschwenken der Wendekordeln 7, 8 übersetzt wird. An den Wendekordeln 7, 8 sind dabei an den Längsseiten der Lamellen angreifende Wendebänder 3 angeknüpft, mit denen die Schwenkbewegung der Wendekordeln 7, 8 auf die Lamellen des Lamellenbehangs 5 übertragen wird.

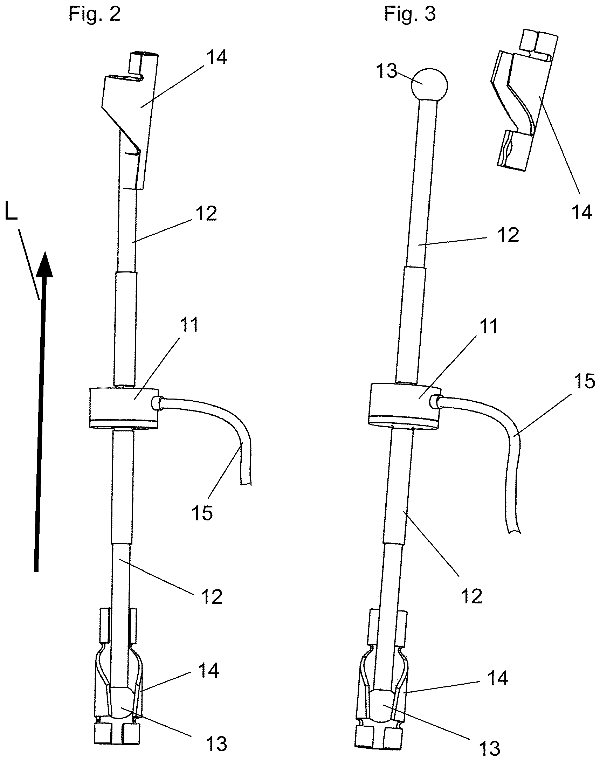

An einem der so gebildeten Wendebandstränge 1, 3, 8 ist die dortige Wendekordel 8 gekürzt und, wie bei Einzelheit A eingezeichnet, eine Sensoreinheit 1 in den Wendebandstrang 1, 3, 8 eingebunden, welche in der Fig. 2 und 3 im Einzelnen gezeigt ist und Teil einer Sicherheitsvorrichtung für den Raffstore ist oder auch eine solche Sicherheitsvorrichtung bilden könnte. Jeder andere Wendebandstrang 3, 7 besteht dagegen aus der dortigen Wendekordel 7 mit dem angebundenen Wendeband 3.

Die Sensoreinheit 1 weist dabei, wie in den Fig. 2 und 3 gezeigt einen Sensorkörper 11 auf, an dem in einer vorgegebenen Soll-Lastrichtung L einander gegenüberliegend jeweils ein Stab 12 anschließt, der an seinem freien Ende einen Kugelkopf 13 einer einer Kugelkopfkupplung 13, 14 trägt. Die Kugelkopfkupplung 13, 14 umfasst jeweils noch eine Kugelkopfaufnahme 14, die an dem zugeordneten Band- bzw. Kordelende des Wendebands 3 oder der Wendekordel 8 angebracht werden kann und in die der Kugelkopf 13 eingehängt wird, um die Sensoreinheit 1 im Wendebandstrang 1, 3, 8 einzubinden. Der Sensorkörper 11 des Sensors ist dabei ein mit Dehnmessstreifen versehener Federkörper, wobei die Dehnmessstreifen über eine Kabelleitung 15 mit einer Speisespannung beaufschlagt werden können und dann im Ansprechen auf die auf den Wendebandstrang 1, 3, 8 wirkende Zugkraft ein Spannungssignal abgeben, dass der Höhe der Zugkraft entspricht.

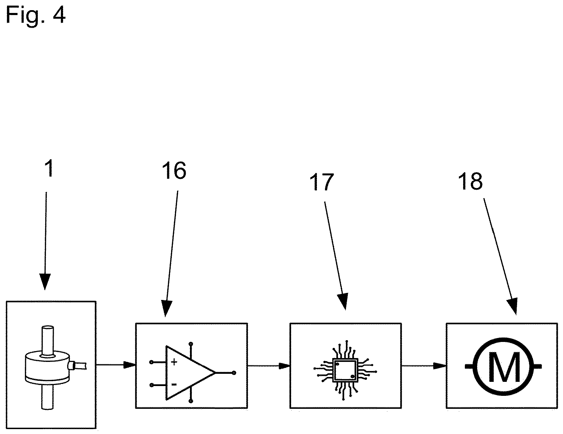

Dieses Ausgangssignal der Sensoreinheit 1 wird dann, wie Fig. 4 zeigt, einer Signalaufbereitungsstufe 16 eingespeist, die üblicherweise einen Messverstärker aufweist, mit dem das Signal verstärkt und uninteressante Frequenzbereiche ausgefiltert werden, so dass es einem Analog-Digital-Wandler zugeführt werden kann, um von dort einer Steuerungseinrichtung 17 als Eingangssignal zugeführt zu werden. Die Steuerungseinrichtung 17 kann dabei einen Mikrocontroller aufweisen und entsprechende Speicher, in denen Softwareroutinen abgelegt und ausführbar sind, mit deren Hilfe aus dem auf dem Ausgangssignal der Sensoreinheit beruhenden Eingangssignal der Steuerungseinrichtung 17 Steuerbefehle als Input für eine im Elektromotor 9 integrierte Motorsteuerung 18 generiert werden.

Die als Software umgesetzten Steuerverfahren basieren dabei auf einem Vergleich des im normalen Betrieb von der Sensoreinheit 1 gelieferten Ausgangssignals mit dem Ist-Ausgangssignal, wobei in den nachfolgenden Figuren einige dieser Signalverläufe in charakteristischen Situationen dargestellt sind.

So zeigt Fig. 5 eine waagrechte Linie, wie sie als Ausgangssignal vom Sensor geliefert wird, wenn der Motor 9 steht und außer der durch die Gewichtskraft des Behangs 5 hervorgerufenen Zuglast keine weitere Belastung an dem Wendebandstrang 1, 3, 8 angreift.

Fig. 6 zeigt dagegen das plötzliche Absinken des Werts des Ausgangssignals, welches dann wieder auf seinen ursprünglichen Wert zurückkehrt, wohingegen die Fig. 7 das plötzliche Auftreten einer Signalerhöhung zeigt, die dann wiederum auf ihren Ausgangswert zurückkehrt. Beides kann als das Auftreten einer Windböe aufgefasst werden, die jeweils aus unterschiedlicher Richtung auf den Lamellenbehang 5 wirkt. Bei schnell aufeinander folgenden Windböen wird sich dagegen ein Signalverlauf ergeben, wie in der Fig. 8 gezeigt, bei dem es Ausschläge in beide Richtungen gibt.

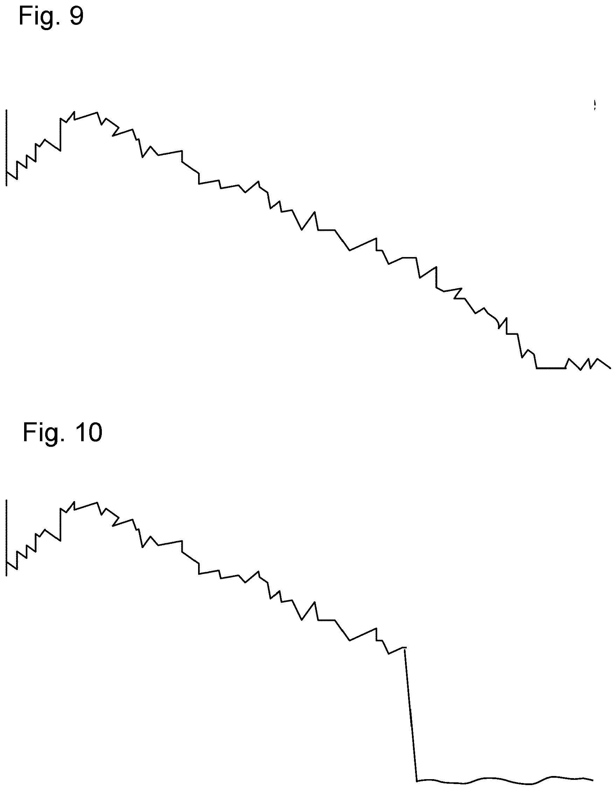

Fig. 9 zeigt dagegen den Signalverlauf beim Ablassen des Lamellenbehangs im Normalbetrieb, wobei das plötzliche Abfallen des Ausgangssignals am Anfang der Behangbewegung einer Drehung der Lamellen in eine Mittelstellung entspricht, in der der Lamellenbehang 5 dann abgelassen wird. Fig. 10 zeigt dagegen den Signalverlauf bei Abwärtsfahrt des Lamellenbehangs 5, wenn der Behang auf ein Hindernis auftrifft. Dabei kommt es zu einem spontanen Abfall der auf den Wendebandstrang 1, 3, 8 wirkenden Zugkraft und damit zu einem Signalabfall, wie in Fig. 10 deutlich zu erkennen ist. Im Vergleich der Kurven aus Fig. 9 und Fig. 10 lässt sich somit eine Hinderniserkennungsroutine für die Steuerungseinrichtung 17 erstellen.

Abwandlungen und Modifikation der gezeigten Ausführungsformen sind möglich, ohne den Rahmen der Erfindung gemäß der folgenden Ansprüche zu verlassen.

## Patentansprüche

1. Sicherheitsvorrichtung für einen Raffstore, mit zumindest einer Sensoreinheit (1), die einen Sensor umfasst, wobei der Sensor zum Erfassen einer Zugkraft bzw. einer Zugkraftänderung und zum Ausgeben eines elektrischen Ausgangssignals eingerichtet ist, welches der erfassten Zugkraft bzw. Zugkraftänderung entspricht, **dadurch gekennzeichnet, dass** die Sensoreinheit Anbindungsmittel (12, 13, 14) umfasst, die geeignet sind, um den Sensor an einen Wendebandstrang (1, 3, 8) des Raffstores zugkrafterfassend anzubinden, so dass die auf den Wendebandstrang (1, 3, 8) wirkende Zugkraft bzw. Zugkraftänderung signalisierbar ist, wobei
die Sicherheitsvorrichtung zumindest eine Steuerungseinrichtung (17) umfasst, in der direkt oder aus den aufbereiteten Ausgangssignalen Steuersignale für eine Ansteuerung des elektromotorischen Raffstoreantriebs (9) erzeugt werden, wobei die Steuerungseinrichtung (17) zur Durchführung eines Steuerungsverfahrens nach einem der Ansprüche 14 oder 15 eingerichtet und programmiert ist.

2. Sicherheitsvorrichtung nach Anspruch 1, **dadurch gekennzeichnet, dass** der Sensor ein Kraftsensor, vorzugsweise ein Membran-Kraftsensor ist und die Steuerungseinrichtung (17) vorzugsweise eine Mikrocontrollereinheit.

3. Sicherheitsvorrichtung nach Anspruch 1 oder 2, **dadurch gekennzeichnet, dass** der Sensor einen Sensorkörper (11) aufweist, an dem in einer vorgegebenen Soll-Lastrichtung (L) gegenüberliegend jeweils ein Anbindungsmittel (12, 13, 14) zum Anbinden eines Band- bzw. Kordelendes des Wendebandstrangs (1, 3, 8) angebracht ist.

4. Sicherheitsvorrichtung nach Anspruch 3, **dadurch gekennzeichnet, dass** die beiden Anbindungsmittel (12, 13, 14) jeweils eine Kugelkopfkupplung (13, 14) aufweisen, mit einem vorzugsweise sensorseitig angebrachten Kugelkopf (13) und einer vorzugsweise band- bzw. kordelendeseitig angebrachten Kugelkopfaufnahme (14), die bevorzugt als Klipsaufnahme zum Einklipsen des zugeordneten Kugelkopfs (13) ausgebildet ist.

5. Sicherheitsvorrichtung nach einem der vorhergehenden Ansprüche, **dadurch gekennzeichnet, dass** die Sicherheitsvorrichtung eine Signalaufbereitungsstufe (16) mit einem Mess- und/oder Ladungsverstärker und einem Analog-Digital-Wandler umfasst, die eingerichtet ist, um das Ausgangssignal zur Verwendung für eine Ansteuerung eines elektromotorischen Raffstoreantriebs (9) aufzubereiten, insbesondere zu verstärken und bandpasszufiltern.

6. Sicherheitsvorrichtung nach einem der vorhergehenden Ansprüche, **dadurch gekennzeichnet, dass** die Sicherheitsvorrichtung zumindest eine, bevorzugt eine Mehrzahl der Sensoreinheiten, zumindest eine, bevorzugt eine Mehrzahl der Steuerungseinrichtungen und eine Mehrzahl von Motorsteuerungsvorrichtungen für die Ansteuerung einer Mehrzahl der elektromotorischen Raffstoreantriebe umfasst, wobei jede Sensoreinheit mit einer Steuerungseinrichtung signalübertragend verbunden ist, und zumindest eine der Mehrzahl von Motorsteuerungsvorrichtungen die zumindest eine Steuerungseinrichtung umfasst, wobei die Mehrzahl von Motorsteuerungsvorrichtungen untereinander vernetzt sind und dazu jede Motorsteuerungsvorrichtung dazu eingerichtet ist, bei der Ansteuerung des zugeordneten elektromotorischen Raffstoreantriebs die Steuersignale der zumindest einen Steuerungseinrichtung miteinzubeziehen.

7. Sicherheitsvorrichtung nach einem der vorhergehenden Ansprüche, **dadurch gekennzeichnet, dass** der Sensor ein kabelgebundener Sensor mit einem Ausgangskabel (15) zur Übertragung des Ausgangssignals, bevorzugt auch zur Übertragung einer Speisespannung für den Sensor ist.

8. Sicherheitsvorrichtung nach einem der Ansprüche 1 bis 6, **dadurch gekennzeichnet, dass** der Sensor ein akkubetriebener Sensor ist, der eine Funkschnittstelle zur Übertragung des Ausgangssignals aufweist.

9. Raffstore, mit einer an einer Kopfleiste (4) drehbar gelagerten Wickelwelle, an der Aufzugbänder (2) und Wendebandstränge (3, 7; 1, 3, 8) aufgenommen sind, und mit einem Lamellenbehang (5), dessen Lamellen mittels der Aufzugbänder (2) ablass- und aufziehbar und mittels der Wendebandstränge (3, 7; 1, 3, 8) schwenkbar sind, wobei die Aufzugbänder (2) an der untersten Lamelle oder Unterschiene des Lamellenbehangs (5) angreifen und die anderen Lamellen durchgreifen, und wobei die Wendebandstränge (3, 7; 1, 3, 8) jeweils ein Wendeband (3) umfassen, das an einer Längsseite der Lamellen angreift, wobei der Raffstore zumindest eine Sicherheitsvorrichtung mit zumindest einer Sensoreinheit (1) umfasst, **dadurch gekennzeichnet, dass** an zumindest einem Wendebandstrang (1, 3, 8) die zumindest eine Sensoreinheit (1) der Sicherheitsvorrichtung zugkrafterfassend angebunden ist, wobei die Sensoreinheit einen Sensor umfasst, der zum Erfassen einer Zugkraft bzw. einer Zugkraftänderung und zum Ausgeben eines elektrischen Ausgangssignals eingerichtet ist, welches der erfassten Zugkraft bzw. Zugkraftänderung entspricht, und die Sensoreinheit Anbindungsmittel (12, 13, 14) umfasst, die geeignet sind, um den Sensor an einen Wendebandstrang (1, 3, 8) des Raffstores zugkrafterfassend anzubinden, so dass die auf den Wendebandstrang (1, 3, 8) wirkende Zugkraft bzw. Zugkraftänderung signalisierbar ist.

10. Raffstore nach Anspruch 9, **dadurch gekennzeichnet, dass** die Sicherheitsvorrichtung die kennzeichnenden Merkmale eines der Ansprüche 2 bis 8 für sich genommen oder in Kombination mit den Merkmalen des Anspruchs 1 aufweist.

11. Raffstore nach Anspruch 9 oder 10, **dadurch gekennzeichnet, dass** die Wendebandstränge (3, 7; 1, 3, 8) jeweils eine Wendekordel (7, 8) umfassen, die an einem an der Wickelwelle mitdrehend ankuppelbaren Wendekordelhalter (6) angebracht ist und auf einer der beiden Seiten der Wickelwelle nach unten hängt, sowie eines der Wendebänder (3), welches mit der zugeordneten Wendekordel (7, 8) verbunden ist, wobei an zumindest einem der Wendebandstränge (1, 3, 8) der Wendekordel (8) und dem zugeordneten Wendeband (3) die zumindest eine Sensoreinheit (1) der Sicherheitsvorrichtung zwischengeordnet ist.

12. Raffstore nach Anspruch 10, **dadurch gekennzeichnet, dass** der Raffstore als elektromotorischen Raffstoreantrieb (9) einen insbesondere in der Kopfleiste (4) angeordneten Elektromotor (9) zur Drehbetätigung der Wickelwelle aufweist, sowie eine Motorsteuerung (18) für den Elektromotor (9), welche den Elektromotor (9) unter Berücksichtigung des von der Sensoreinheit (1) erzeugten Ausgangssignals ansteuert.

13. Raffstore nach Anspruch 12, **dadurch gekennzeichnet, dass** der Raffstore eine der Sensoreinheit (1) und der Motorsteuerung (18) zwischengeschaltete Signalaufbereitungsstufe (16) aufweist, in der die Ausgangssignale zur Verwendung für die Ansteuerung des Elektromotors (9) aufbereitet werden, sowie vorzugsweise eine Steuereinrichtung (17), in der aus den aufbereiteten Ausgangssignalen Steuersignale für die Motorsteuerung (18) des Raffstoreantriebs (9) erzeugt werden, insbesondere gemäß einem Steuerungsverfahren nach einem der Ansprüche 14 oder 15.

14. Steuerungsverfahren zur Ansteuerung eines elektromotorischen Raffstoreantriebs (9), **dadurch gekennzeichnet, dass** ein Ausgangssignal eines an einem Wendebandstrang (1, 3, 8) eines Raffstores angreifenden und eine auf den Wendebandstrang (1, 3, 8) wirkende Zuglast erfassenden Sensors direkt oder in aufbereiteter Form als Eingangssignal genommen wird, und erfasst wird, ob der Raffstoreantrieb (9) steht, beispielsweise indem erfasst wird, ob das Ausgangssignal des an dem Wendebandstrang (1, 3, 8) des den Raffstoreantrieb (9) enthaltenden Raffstores angreifenden und eine auf den Wendebandstrang (1, 3, 8) wirkende Zuglast erfassenden Sensors einen waagrechten zeitlichen Verlauf hat, und, falls ja, überwacht wird, ob das Ausgangssignal von dem waagrechten zeitlichen Verlauf oder einem eine Gewichtsbelastung des Bandstrangs (1, 3, 8) bei stehendem Raffstoreantrieb (9) entsprechenden Normalwert des Ausgangssignal abweicht, wobei bei einer als signifikant detektierten Abweichung ein Steuersignal zur Ansteuerung des elektromotorischen Raffstoreantriebs (9) erzeugt wird, das beispielsweise einem Aufziehen des Lamellenbehangs (5) entspricht und/oder ein Steuersignal zur Ansteuerung einer übergeordneten Alarmanlage, das beispielsweise einem Ausgeben eines Alarmsignals entspricht.

15. Steuerungsverfahren zur Ansteuerung eines elektromotorischen Raffstoreantriebs (9), **dadurch gekennzeichnet, dass** ein Ausgangssignal eines an einem Wendebandstrang (1, 3, 8) eines Raffstores angreifenden und eine auf den Wendebandstrang (1, 3, 8) wirkende Zuglast erfassenden Sensors direkt oder in aufbereiteter Form als Eingangssignal genommen wird, und erfasst wird, ob der Raffstoreantrieb (9) steht, beispielsweise indem erfasst wird, ob das Ausgangssignal des an dem Wendebandstrang (1, 3, 8) des den Raffstoreantrieb (9) enthaltenden Raffstores angreifenden und die auf den Wendebandstrang (1, 3, 8) wirkende Zuglast erfassenden Sensors einen waagrechten zeitlichen Verlauf hat, und, falls nein, überwacht wird, ob das Ausgangssignal von einem abgespeicherten, vorzugsweise vorher mit dem Sensor erfassten, normalen zeitlichen Verlauf des Ausgangssignals während des Aufziehens oder Ablassens des Lamellenbehangs (5) abweicht, wobei bei einer als signifikant detektierten Abweichung ein Steuersignal zur Ansteuerung des Raffstoreantriebs (9) erzeugt wird, das beispielsweise einem Motorstopp entspricht.

## Claims

1. Safety device for a shutter blind, comprising at least one sensor unit (1) comprising a sensor, wherein the sensor is adapted to detect a tensile force or a change in tensile force and to output an electrical output signal corresponding to the detected tensile force or change in tensile force, **characterized in that** the sensor unit comprises tethering means (12, 13, 14) which are suitable for connecting the sensor to a turning belt strand (1,3, 8) of the shutter blind in a tensile force-detecting manner, so that the tensile force or change in tensile force acting on the turning belt strand (1, 3, 8) can be signaled, wherein
the safety device comprises at least one control device (17) in which control signals for controlling the electromotive shutter blind drive (9) are generated directly or from the processed output signals, wherein the control device (17) is set up and programmed to carry out a control method according to one of claims 14 or 15.

2. Safety device according to claim 1, **characterized in that** the sensor is a force sensor, preferably a membrane force sensor, and the control device (17) is preferably a microcontroller unit.

3. Safety device according to claim 1 or 2, **characterized in that** the sensor has a sensor body (11), to which a respective tethering means (12, 13, 14) for tethering a belt or cord end of the turning belt strand (1, 3, 8) is attached opposite in a predetermined nominal load direction (L).

4. Safety device according to claim 3, **characterized in that** the two tethering means (12,13, 14) each have a ball head coupling (13,14), having a ball head (13) preferably attached on the sensor side and a ball head receptacle (14) preferably attached on the belt or cord end side, which is preferably designed as a clip receptacle for clipping in the associated ball head (13).

5. Safety device according to one of the preceding claims, **characterized in that** the safety device comprises a signal conditioning stage (16) with a measurement and/or charge amplifier and an analog-to-digital converter, which is set up to condition, in particular amplify and bandpass-filter, the output signal for use for controlling an electromotive shutter blind drive (9).

6. Safety device according to one of the preceding claims, **characterized in that** the safety device comprises at least one, preferably a plurality of said sensor units, at least one, preferably a plurality of the control devices, and a plurality of motor control devices for controlling a plurality of the electromotive shutter blind drives, wherein each sensor unit is connected to a control device in a signal-transmitting manner, and at least one of the plurality of motor control devices comprises the at least one control device, wherein the plurality of motor control devices are networked with one another and for this purpose each motor control device is set up to include the control signals of the at least one control device in the control of the associated electromotive shutter blind drive.

7. Safety device according to one of the preceding claims, **characterized in that** the sensor is a wired sensor with an output cable (15) for transmitting the output signal, preferably also for transmitting a supply voltage for the sensor.

8. Safety device according to one of claims 1 to 6, **characterized in that** the sensor is a battery-powered sensor having a radio interface for transmitting the output signal.

9. Shutter blind, having a winding shaft rotatably mounted on a head rail (4), on which winding belts (2) and turning belt strands (3, 7; 1, 3, 8) are accommodated, and having a slat curtain (5), the slats of which can be lowered and raised by means of the winding belts (2) and pivoted by means of the turning belt strands (3, 7; 1, 3, 8), wherein the winding belts (2) engage on the lowermost slat or bottom rail of the slat curtain (5) and engage through the other slats, and wherein the turning belt strands (3, 7; 1, 3, 8) each comprise a turning belt (3) which engages on a longitudinal side of the slats, wherein the shutter blind comprises at least one safety device having at least one sensor unit (1), **characterized in that** the at least one sensor unit (1) of the safety device is connected to at least one turning belt strand (1, 3, 8) in a tensile-force-detecting manner, wherein the sensor unit comprises a sensor which is set up to detect a tensile force or a change in tensile force and to output an electrical output signal which corresponds to the detected tensile force or change in tensile force, and the sensor unit comprises tethering means (12, 13, 14) which are suitable for connecting the sensor to a turning belt strand (1, 3, 8) of the shutter blind in a tensile-force-detecting manner, so that the tensile force or change in tensile force acting on the turning belt strand (1, 3, 8) can be signaled.

10. Shutter blind according to claim 9, **characterized in that** the safety device has the characterizing features of one of claims 2 to 8 taken by itself or in combination with the features of claim 1.

11. Shutter blind according to claim 9 or 10, **characterized in that** the turning belt strands (3, 7; 1, 3, 8) each comprise a turning cord (7, 8) which is attached to a turning cord holder (6) which can be coupled to the winding shaft in a co-rotating manner and hangs downwards on one of the two sides of the winding shaft, and one of the turning belts (3) which is connected to the associated turning cord (7, 8), wherein the at least one sensor unit (1) of the safety device is interposed on at least one of the turning belt strands (1, 3, 8) of the turning cord (8) and the associated turning belt (3).

12. Shutter blind according to claim 10, **characterized in that** the shutter blind has, as the electromotive shutter blind drive (9), an electric motor (9), arranged in particular in the head rail (4), for the rotary actuation of the winding shaft, and a motor controller (18) for the electric motor (9), which controls the electric motor (9) by taking into account the output signal generated by the sensor unit (1).

13. Shutter blind according to claim 12, **characterized in that** the shutter blind has a signal conditioning stage (16) which is connected in between the sensor unit (1) and the motor controller (18) and in which the output signals are conditioned for use for driving the electric motor (9), and preferably a control device (17) in which control signals for the motor controller (18) of the shutter blind drive (9) are generated from the conditioned output signals, in particular in accordance with a control method according to one of claims 14 or 15.

14. Control method for controlling an electromotive shutter blind drive (9), **characterized in that** an output signal of a sensor acting on a turning belt strand (1, 3, 8) of a shutter blind and detecting a tensile load acting on the turning belt strand (1, 3, 8) is taken as input signal directly or in processed form, and it is detected whether the shutter blind drive (9) has stopped, for example by detecting whether the output signal of the sensor acting on the turning belt strand (1, 3, 8) of the shutter blind containing the shutter blind drive (9) and detecting a tensile load acting on the turning belt strand (1, 3, 8) has a horizontal temporal course, and, if so, it is monitored whether the output signal deviates from the horizontal temporal course or from a normal value of the output signal corresponding to a weight load of the belt strand (1, 3, 8) when the shutter blind drive (9) is stationary, wherein, in the event of a deviation detected as significant, a control signal for controlling the electromotive shutter blind drive (9) is generated, which corresponds, for example, to raising the slat curtain (5), and/or a control signal for controlling a higher-level alarm system, which corresponds, for example, to issuing an alarm signal.

15. Control method for controlling an electromotive shutter blind drive (9), **characterized in that** an output signal of a sensor acting on a turning belt strand (1, 3, 8) of a shutter blind and detecting a tensile load acting on the turning belt strand (1, 3, 8) is taken as input signal directly or in processed form, and it is detected whether the shutter blind drive (9) has stopped, for example by detecting whether the output signal of the sensor acting on the turning belt strand (1, 3, 8) of the shutter blind containing the shutter blind drive (9) and detecting the tensile load acting on the turning belt line (1, 3, 8) has a horizontal temporal course, and, if not, it is monitored whether the output signal deviates from a stored normal temporal course of the output signal during the raising or lowering of the slat curtain (5), preferably previously detected with the sensor, wherein in the case of a deviation detected as significant, a control signal for controlling the shutter blind drive (9) is generated, which corresponds for example to a motor stop.

## Revendications

1. Dispositif de sécurité pour un store à lamelles, avec au moins une unité de capteur (1) qui comprend un capteur, dans lequel le capteur est conçu pour capter une force de traction ou un changement de la force de traction et pour émettre un signal de sortie électrique correspondant à la force de traction ou au changement de la force de traction, **caractérisé en ce que** l'unité de capteur comprend des moyens de connexion (12, 13, 14) pour connecter le capteur à un brin de sangle d'orientation (1, 3, 8) du store à lamelles pour capter la force de traction, de telle sorte que la force de traction ou le changement de la force de traction agissant sur le brin de sangle d'orientation (1, 3, 8) puisse être signalé,
le dispositif de sécurité comprenant au moins une installation de commande (17) dans laquelle des signaux de commande sont produits directement ou à partir de signaux de sortie traités en vue de l'activation de l'entraînement de store à lamelles à moteur électrique (9) l'installation de commande (17) étant conçue et programmée pour exécuter un procédé de commande selon l'une des revendications 14 ou 15.

2. Dispositif de sécurité selon la revendication 1, **caractérisé en ce que** le capteur est un capteur de force, de préférence un capteur de force à membrane, et l'installation de commande (17) est de préférence une unité de microcontrôleur.

3. Dispositif de sécurité selon la revendication 1 ou 2, **caractérisé en ce que** le capteur présente un corps de capteur (11) sur lequel des moyens de connexion (12, 13, 14) se faisant face sont montés chacun dans une direction nominale d'application de la charge (L) pour connecter chacun une extrémité de la sangle ou du cordon du brin de sangle d'orientation (1, 3, 8).

4. Dispositif de sécurité selon la revendication 3, **caractérisé en ce que** les deux moyens de connexion (12, 13, 14) présentent chacun un accouplement à tête sphérique (13, 14) avec une tête sphérique (13) disposée de préférence du côté du capteur et un logement de tête sphérique (14) disposé de préférence du côté de la sangle ou du cordon et conçu de préférence comme un logement clipsable pour l'enclenchement de la tête sphérique (13) correspondante.

5. Dispositif de sécurité selon l'une des revendications précédentes, **caractérisé en ce que** le dispositif de sécurité comprend un étage de préparation du signal (16) avec un amplificateur de mesure et/ou de charge et un convertisseur analogique-numérique conçu pour traiter le signal de sortie afin de l'utiliser pour activer un entraînement de store à lamelles à moteur électrique (9), en particulier pour l'amplifier et filtrer sa bande passante.

6. Dispositif de sécurité selon l'une des revendications précédentes, **caractérisé en ce que** le dispositif de sécurité comprend au moins une, de préférence plusieurs unités de capteur, au moins une, de préférence plusieurs installations de commande et plusieurs dispositifs de commande de moteur pour activer plusieurs entraînements de store à lamelles à moteur électrique, chaque unité de capteur communicant avec une installation de commande en vue de la transmission de signaux, et au moins un des plusieurs dispositifs de commande de moteur comprenant au moins une installation de commande, les plusieurs dispositifs de commande de moteur étant montés ensemble en réseau et chaque dispositif de commande de moteur étant conçu pour intégrer les signaux de commande de l'au moins une installation de commande dans l'activation de l'entraînement de store à lamelles à moteur électrique.

7. Dispositif de sécurité selon l'une des revendications précédentes, **caractérisé en ce que** le capteur est un capteur à câble avec un câble de sortie (15) pour la transmission du signal de sortie, de préférence aussi pour la transmission d'une tension d'alimentation pour le capteur.

8. Dispositif de sécurité selon l'une des revendications 1 à 6, **caractérisé en ce que** le capteur est un capteur à accumulateur qui présente une interface radio pour la transmission du signal de sortie.

9. Store à lamelles avec un axe d'enroulement capable de rotation sur un caisson supérieur (4), sur lequel sont reçus des sangles de traction (2) et des brins de sangle d'orientation (3, 7 ; 1, 3, 8) et avec un tablier de lamelles (5) dont les lamelles peuvent être descendues et remontées au moyen des sangles de traction (2) et orientées de façon pivotante au moyen des brins de sangle d'orientation (3, 7 ; 1, 3, 8), dans lequel les sangles de traction (2) se mettent en prise sur la lamelle la plus basse ou le rail inférieur du tablier de lamelles (5) et traversent les autres lamelles, et les brins de sangle d'orientation (3, 7 ; 1, 3, 8) comprennent chacun une sangle d'orientation (3) qui se met en prise sur un côté long des lamelles, le store à lamelles comprenant au moins un dispositif de sécurité avec au moins une unité de capteur (1), **caractérisé en ce que** l'au moins une unité de capteur (1) du dispositif de sécurité est reliée à au moins un brin de sangle d'orientation (1, 3, 8) de façon à capter la force de traction, l'unité de capteur comprenant un capteur conçu pour capter une force de traction ou un changement de la force de traction et émettre un signal de sortie électrique correspondant à la force de traction ou au changement de la force de traction capté et l'unité de capteur comprenant des moyens de connexion (12, 13, 14) qui sont adaptés pour relier le capteur à un brin de sangle d'orientation (1, 3, 8) du store à lamelles de façon à capter la force de traction, de telle sorte que la force de traction ou le changement de la force de traction agissant sur le brin de sangle d'orientation (1, 3, 8) puisse être signalé.

10. Store à lamelles selon la revendication 9, **caractérisé en ce que** le dispositif de sécurité présente les éléments caractérisants de l'une des revendications 2 à 8, seuls ou en combinaison avec les caractéristiques de la revendication 1.

11. Store à lamelles selon la revendication 9 ou 10, **caractérisé en ce que** les brins de sangle d'orientation (3, 7 ; 1, 3, 8) comprennent chacun un cordon d'orientation (7, 8) qui est disposé sur une monture de cordon d'orientation (6) pouvant être couplée sur l'arbre d'enroulement et tourner avec lui et qui pend vers le bas sur l'un des deux côtés de l'arbre d'enroulement, ainsi que l'une des sangles d'orientation (3), qui est reliée au cordon d'orientation (7, 8) correspondant, l'au moins une unité de capteur (1) du dispositif de sécurité étant intercalée sur au moins un des brins de sangle d'orientation (1, 3, 8) du cordon d'orientation (8) et la sangle d'orientation (3) correspondante.

12. Store à lamelles selon la revendication 10, **caractérisé en ce que** le store à lamelles comporte comme entraînement de store à lamelles à moteur électrique (9) un moteur électrique (9), disposé en particulier dans le caisson supérieur (4), pour l'actionnement rotatif de l'arbre d'enroulement, ainsi qu'une commande de moteur (18) pour le moteur électrique (9) qui commande le moteur électrique (9) en tenant compte du signal de sortie produit par l'unité de capteur (1).

13. Store à lamelles selon la revendication 12, **caractérisé en ce que** le store à lamelles comprend un étage de préparation du signal (16) monté entre l'unité de capteur (1) et la commande de moteur (18), dans lequel sont traités les signaux de sortie à utiliser pour l'activation du moteur électrique (9) et, de préférence, une installation de commande (17), dans laquelle des signaux de commande pour la commande de moteur (18) de l'entraînement de store à lamelles (9) sont produits à partir des signaux de sortie traités, en particulier suivant un procédé de commande selon l'une des revendications 14 ou 15.

14. Procédé de commande pour l'activation d'un entraînement de store à lamelles à moteur électrique (9), **caractérisé en ce qu'**un signal de sortie d'un capteur qui se met en prise sur un brin de sangle d'orientation (1, 3, 8) d'un store à lamelles et capte une force de traction agissant sur le brin de sangle d'orientation (1, 3, 8) est pris comme signal d'entrée, directement ou après traitement, et le capteur détecte si l'entraînement de store à lamelles (9) est à l'arrêt, par exemple en détectant si le signal de sortie du capteur qui se met en prise sur un brin de sangle d'orientation (1, 3, 8) du store à lamelles contenant l'entraînement de store à lamelles (9) et capte une force de traction agissant sur le brin de sangle d'orientation (1, 3, 8) a une forme horizontale dans le temps et, si oui, surveille si le signal de sortie s'écarte de la forme horizontale ou d'une valeur normale du signal de sortie correspondant à l'action de la pesanteur sur le brin de sangle (1, 3, 8) alors que l'entraînement de store à lamelles (9) est à l'arrêt, un signal de commande, correspondant par exemple au remontage du tablier de lamelles (5), et/ou un signal de commande correspondant, par exemple, à l'émission d'un signal d'alarme pour activer une installation d'alarme de niveau supérieur étant émis pour activer l'entraînement de store à lamelles à moteur électrique (9) en cas de détection d'une différence significative.

15. Procédé de commande pour l'activation d'un entraînement de store à lamelles à moteur électrique (9), **caractérisé en ce qu'**un signal de sortie d'un capteur qui se met en prise sur un brin de sangle d'orientation (1, 3, 8) d'un store à lamelles et détecte une force de traction agissant sur le brin de sangle d'orientation (1, 3, 8) est pris comme signal d'entrée, directement ou après traitement, et le capteur détecte si l'entraînement de store à lamelles (9) est à l'arrêt, par exemple en détectant si le signal de sortie du capteur qui se met en prise sur un brin de sangle d'orientation (1, 3, 8) du store à lamelles contenant l'entraînement de store à lamelles (9) et capte une force de traction agissant sur le brin de sangle d'orientation (1, 3, 8) a une forme horizontale et, si ce n'est pas le cas, surveille si le signal de sortie s'écarte d'une forme normale du signal de sortie enregistrée en mémoire, de préférence captée auparavant par le capteur, pendant le remontage ou l'abaissement du tablier de lamelles (5), un signal de commande qui correspond à un signal de commande pour l'actionnement de l'entraînement de store à lamelles (9), par exemple à un arrêt du moteur, étant émis si un écart significatif est détecté.
